## Europäisches Patentamt
## European Patent Office
## Office européen des brevets

(19)

(11) Veröffentlichungsnummer: **0 195 884**
**B1**

(12) # EUROPÄISCHE PATENTSCHRIFT

(45) Veröffentlichungstag der Patentschrift:
18.10.89

(51) Int. Cl.⁴: **B 60 K 5/12**, B 60 K 17/16

(21) Anmeldenummer: **86100329.1**

(22) Anmeldetag: **13.01.86**

(54) Getriebelagerung, insbesondere für ein Hinterachsdifferential eines Kraftfahrzeuges.

(30) Priorität: 28.02.85 DE 3507042

(43) Veröffentlichungstag der Anmeldung:
01.10.86 Patentblatt 86/40

(45) Bekanntmachung des Hinweises auf die Patenterteilung:
18.10.89 Patentblatt 89/42

(84) Benannte Vertragsstaaten:
DE FR GB IT SE

(56) Entgegenhaltungen:
EP-A- 0 009 805
DE-A- 2 442 351
DE-A- 3 207 035
DE-B- 2 360 514
GB-A- 2 096 952

(73) Patentinhaber: **Dr.Ing.h.c. F. Porsche
Aktiengesellschaft, Porschestrasse 42,
D-7000 Stuttgart 40 (DE)**

(72) Erfinder: **Fischle, Rüdiger, Dipl.-Ing.FH,
Niederhofenstrasse 33/2, D-7250 Leonberg (DE)**
Erfinder: **von Sivers, Rolf, Dipl.-Ing. FH, Gebersheimer
Strasse 7/1, D-7255 Rutesheim (DE)**

ACTORUM AG

EP 0 195 884 B1

## Beschreibung

Die Erfindung bezieht sich auf eine Getriebelagerung nach dem Oberbegriff des Anspruchs 1.

Bei einer Aggregatlagerung in einem Kraftfahrzeug ist man bestrebt, insbesondere die durch Motoranregungen erzeugten Vibrationen gering zu halten. Hierzu sind spezielle elastische Lagerelemente mit in verschiedenen Richtungen abgestimmter Kennung bekannt (DE-A-19 03 253). Desweiteren kann durch die Lage des Lagerorts in einem biegeschwingungsarmen Bereich des Gesamtaggregats eine Herabsetzung der Vibration erreicht werden (DE-B 23 60 514). Diesen Biegeschwingungen ist meist noch eine Torsionsschwingung überlagert, so dass die Lage des Lagerorts im biegeschwingungsarmen Bereich zur wesentlichen Vermeidung von Vibrationen nicht ausreichend ist.

Desweiteren ist aus der GB-A-20 96 962 ein Lager für ein Hinterachsgetriebe bekannt, das oberhalb der von vom Getriebe abgehenden Radantriebswellen angeordnet ist. Es nimmt eine Lage mit relativ grossem Abstand zur Längsachse des Aggregats ein, was sich nachteilig auf das Lager in bezug auf seine Anregung auswirkt.

Aufgabe der Erfindung ist es eine Dreipunktlagerung für ein Gesamtaggregat bestehend aus Motor, Zentralrohreinheit und Hinterachsdifferential zu schaffen, mit der insbesondere für das Hinterachsdifferential eine weitestgehend vibrationsfreie Lagerung zu erzielen ist.

Diese Aufgabe wird erfindungsgemäss durch die kennzeichnenden Merkmale des Anspruchs 1 gelöst. Weitere vorteilhafte Merkmale der Erfindung beinhalten die Unteransprüche.

Die durch die Erfindung erreichten Vorteile bestehen im wesentlichen darin, dass für eine Dreipunktlagerung eines Antriebsaggregats mit Zentralrohrausführung das hintenliegende, seitlich angeordnete einziger Lager für das Hinterachsdifferential so anzuordnen ist, es von Torsionsschwingungen weitestgehend freigehalten wird bzw. die Torsionsschwingungen nur zu einem geringen Anteil zur Wirkung kommen. Dies wird ermöglicht, indem im Gehäuse des Differentials eine Lageraufnahme vorgesehen ist, die den Lagerort möglichst nahe zur Antriebswelle hin verlegt, so dass der Schwingungsausschlag um die Antriebswelle das Lager nur geringfügig anregen kann.

Durch die eingebettete Anordnung des Lagerelements im Gehäuse ist es geschützt, zusätzliche Lagerschalen können entfallen und es ist in einfacher Weise in die Ausnehmung des Gehäuses einsetzbar, wobei ausserdem noch von Vorteil ist, dass die Ausnehmung nach dem Giessen des Gehäuses nicht bearbeitet werden muss.

Durch eine entsprechende Anordnung des Lagerelements zum Boden der Ausnehmung hin und durch eine zu dieser Ausnehmung nach aussen hin abschliessenden Haltescheibe werden Queranschläge gebildet.

Ein Ausführungsbeispiel der Erfindung ist in der Zeichnung dargestellt und wird im folgenden näher beschrieben.

Es zeigt

Fig. 1 eine Draufsicht auf eine dreipunktgelagerte Antriebsanordnung für ein Allradfahrzeug mit einem Zentralrohr sowie der vom Gesamtaggregat erzeugten Biegeschwingungen,

Fig. 2 eine Ansicht in Pfeilrichtung Z auf das Hinterachsdifferential mit den vom Gesamtaggregat erzeugten Torsionsschwingungen,

Fig. 3 eine Seitenansicht auf das Lagerelement im Gehäuse des Hinterachsdifferentials,

Fig. 4 einen Schnitt durch das Lagerelement nach der Linie IV–IV, und

Fig. 5 eine Ansicht auf das Lagerelement, in Pfeilrichtung X gesehen.

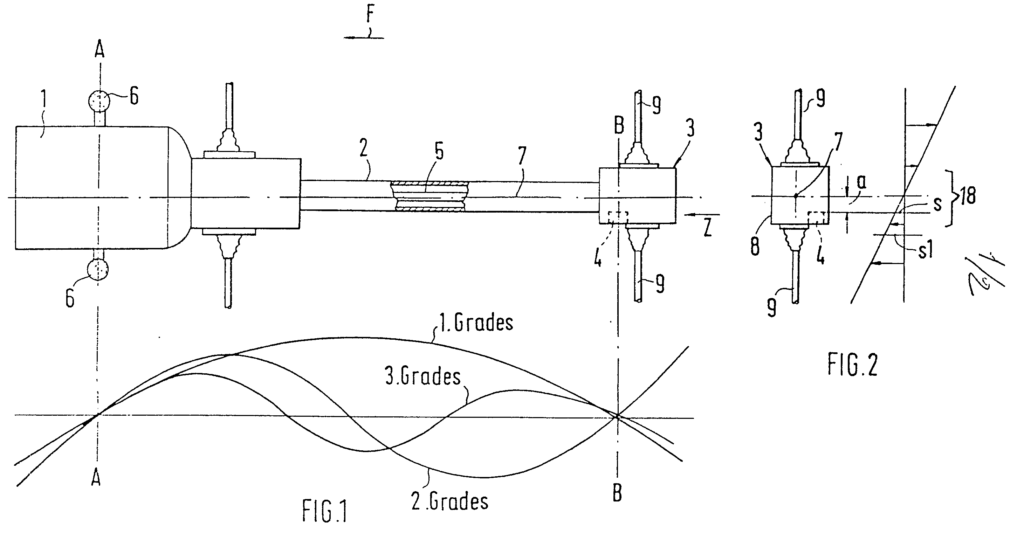

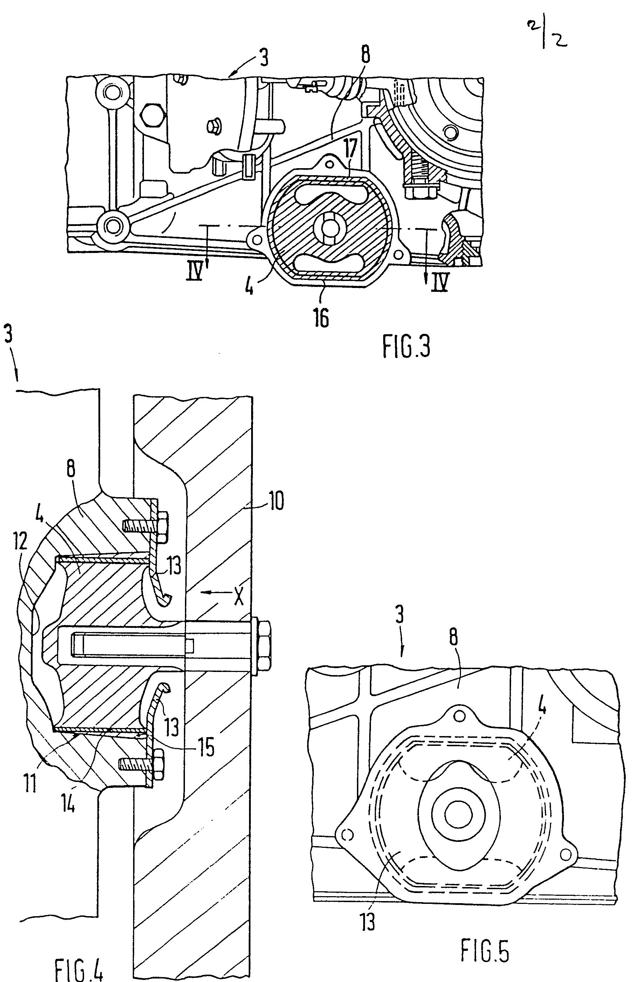

Wie Fig. 1 näher zeigt, umfasst das gesamte Antriebsaggregat für ein Allradfahrzeug im wesentlichen eine vornliegende Brennkraftmaschine 1 mit Getriebe, wobei diese Einheit mittels eines Zentralrohrs 2 mit einem hintenliegenden Differential 3 zu einer starren Einheit verbunden ist. Diese Einheit ist im Bereich der Brennkraftmaschine 1 über Lagerelemente 6 zweifach und im Bereich des Hinterachsdifferentials 3 über ein seitlich angeordnetes einziges Lagerelement 4 aufbauseitig gehalten. Eine Antriebsverbindung von der Brennkraftmaschine 1 zum Hinterachsdifferential erfolgt über eine im Zentralrohr 2 gelagerte Antriebswelle 5.

Die beiden Lagerelemente 6 der Brennkraftmaschine 1 sind in einem ersten biegeschwingungsarmen Bereich A-A und das einzige Lagerelement 4 des Hinterachsdifferentials 3 ist in einem zweiten biegeschwingungsarmen Bereich B-B angeordnet. In Fig. 1 sind nur die Biegeschwingungen ersten, zweiten und dritten Grades dargestellt, wobei der Nulldurchgang in der senkrechten Ebene der Lager 4 und 6 liegt. Darüber hinaus ist das Lagerelement 4 möglichst nahe und mit einem geringstmöglichen Abstand a an die Langsachse 7 der Antriebswelle 5 herangerückt, wozu es ins Differentialgehäuse 8 integriert ist. Hierdurch wird erreicht, dass wie Fig. 2 schematisch zeigt, die Torsionsausschläge s um die Längsachse 7 nicht mit starker Intensität auf das Lagerelement 4 einwirken können, wie es z.B. bei einem Lagerort im Bereich 18 in Höhe der Torsionsschwingung s1 der Fall sein würde.

Das Lagerelement 4 ist in Bezug auf die Fahrtrichtung F vor den Radantriebswelle 9 und unterhalb von diesen angeordnet. Eine aufbauseitige Abstützung erfolgt entweder über einen zusätzlichen Längsträger 10 (Fig. 4) oder von einem Unterträger, der an seinen beiden Enden an der Aufbaustruktur abgestützt ist oder das Lagerelement 4 ist direkt mit der Aufbaustruktur des Kraftfahrzeuges verbunden, falls ein entsprechender Lagerort am Fahrzeugaufbau vorhanden ist.

Der Längsträger ist möglichst nahe an das Differentialgehäuse 8 herangeführt und kann das Lagerelement 4 schalenförmig umfassen, d.h. das Lagerelement 4 ist teilweise in den Längsträger 10 eingebettet.

Die Ausnehmung 11 im Gehäuse 8 ist eingegossen und unbearbeitet. Sie ist kegelstumpfförmig mit einem sich zur Aussenseite hin vergrössernden Durchmesser ausgeführt. Das Lagerelement 4 weist eine entsprechende Aussenform auf, über die es formschlüssig in der Ausnehmung 11 gehalten wird. Zum Toleranzausgleich dient eine Ummantelung 15 der Metallhülse 14 des Lagerelements 4 aus Gummi.

Das Lagerelement 4 weist an seiner Ober- und Unterseite eine Abflachung 16 und 17 auf. Diese Abflachung 17 ermöglicht es, dass das Lager 4 näher zur Längsachse 7 angeordnet werden kann, da hierdurch ein näheres Heranrücken an das benachbarte Kegelrad des Differentials möglich wird.

Die Ausnehmung 11 ist in der Weise ausgeführt, dass der Boden 12 eine Queranschlagsfläche für das Lagerelement 4 bildet. An der gegenüberliegenden Seite ist die Ausnehmung 11 mit einer angeschraubten Haltescheibe 13 für das Element 4 verbunden, die gleichzeitig einen weiteren Queranschlag zur Aussenseite hin bildet.

## Patentansprüche

1. Getriebelagerung für ein Hinterachsdifferential eines Kraftfahrzeugs, das über eine Zentralrohreinheit mit einer vornliegenden, zweifach gelagerten Brennkraftmaschine verbunden ist und wobei das Differential am Fahrzeugaufbau abgestützt wird, dadurch gekennzeichnet, dass das Hinterachsdifferential (3) über ein einziges Lagerelement (4) an einem seitlich des Differentialgehäuses (8) verlaufenden Längsträger (10) des Fahrzeugaufbaus abgestützt wird und unterhalb der vom Differentialgehäuse (8) abgehenden Radantriebswellen (9) und vor diesen – in bezug auf die Fahrtrichtung (F) – in einer in das Differentialgehäuse (8) integrierten Ausnehmung (11) gehalten ist.

2. Lagerung nach einem oder mehreren der vorhergehenden Ansprüche, dadurch gekennzeichnet, dass die Ausnehmung (11) im Gusskörper des Differentialgehäuses (8) vorgesehen ist und das Lagerelement (4) eingebettet in diesem Gehäuse (8) gehalten wird.

3. Lagerung nach Anspruch 3, dadurch gekennzeichnet, dass die Lager-Ausnehmung (11) kegelstumpfförmig mit nach aussen hin sich vergrösserndem Durchmesser ausgeführt ist und das Lagerelement über eine entsprechend kegelstumpfförmig ausgeführte Gummischicht (15) um einen Metallmantel (14) des Lagerelements (4) formschlüssig in der Ausnehmung (11) aufgenommen ist.

4. Lagerung nach den Ansprüchen 3 oder 4, dadurch gekennzeichnet, dass die Ausnehmung (11) einen axialen Ausfeder- und Einfederschlag (Boden 12, Haltescheibe 13) aufweist.

5. Lagerung nach Anspruch 5, dadurch gekennzeichnet, dass der Ausferanschlag vom Boden (12) der Ausnehmung (11) und der Einfederanschlag von einer aussenseitig des Getriebegehäuses (8) angebrachten Haltescheibe (13) gebildet wird, die gleichzeitig ein Befestigungselement für das Lagerelement (4) bildet.

## Revendications

1. Système de fixation du système d'engrenages pour un différentiel d'essieu arrière de véhicule automobile, qui est relié par un élément tubulaire central à un moteur à combustion interne disposé à l'avant et fixé en deux points, ledit différentiel prenant appui sur la carrosserie du véhicule, caractérisé par le fait que le différentiel de l'essieu arrière (3) prend appui contre un longeron (10) de la corrosserie du véhicule, s'étendant sur le côté du carter (8) du différentiel, par l'intermédiaire d'un élément de suspension (4) unique, en un point qui se trouve en dessous des arbres d'entraînement des roues (9) qui partent du carter (8) du différentiel et en avant de ces arbres, dans le sens de la marche (F), ledit élément de suspension (4) étant logé dans une évidement (11) prévu dans le carter (8) du différentiel.

2. Systsème de fixation selon la revendication précédente, caractérisé par le fait que l'évidement (11) est prévu dans le corps moulé du carter (8) du train différentiel et que l'élément de suspension (4) est tenu logé dans ce carter (8).

3. Système de fixation selon la revendication 2 caractérisé par le fait que l'évidement de logement (11) est réalisé en tronc de cône dont le diamètre s'agrandit vers l'extérieur, et que l'élément de suspension est tenu par conjugaison de forme dans l'évidement (11) au moyen d'un enrobage de caoutchouc (15) autour d'un manchon métallique (14) de l'élément de suspension (4).

4. Système selon les revendications 2 ou 3, caractérisé par le fait que l'évidement (11) présente une butée axiale d'enfoncement et de sortie élastique (fond 12, plaque d'arrêt 13).

5. Système de fixation selon la revendication 4, caractérisé par le fait que la butée dans le sens de l'enfoncement est constituée par le fond (12) de l'évidement (11) et que la butée dans le sens de la sortie est constituée par une plaque d'arrêt (13) rapportée à l'extérieur du carter (8) du différentiel, qui assure en même temps l'immobilisation de l'élément (4).

## Claims

1. A transmission mounting for a rear differential of a motor vehicle, which is connected by way of a central tube unit to a doubly mounted internal combustion engine positioned in front, the differential being supported on the vehicle body, characterized in that the rear differential (3) is supported by way of a single bearing element (4) on a longitudinal member (10) – extending laterally of the differential housing (8) – of the vehicle body and is held in a recess (11) integrated in the differential housing (8) below the wheel drive shafts (9) starting from the differential housing (8) and in front thereof – relative to the direction of travel (F).

2. A mounting according to one or more of the preceding Claims, characterized in that the recess (11) is provided in the casting of the differential housing (8), and the bearing element (4) is held embedded in the said housing (8).

3. A mounting according to Claim 3, characterized in that the bearing recess (11) is made frustoconical with a diameter which increases towards the outside, and the bearing element is received with positve locking in the recess (11) by way of a suitably frustoconically shaped rubber layer (15) around a metal jacket (14) of the bearing element (4).

4. A mounting according to Claim 3 or 4, characterized in that the recess (11) has an axial stop for springing in or out (base 12, holding disc 13).

5. A mounting according to Claim 5, characterized in that the stop for springing out is formed by the base (12) of the recess (11) and the stop for springing in is formed by a holding disc (13) which is mounted on the outside of the transmission housing (8) and which at the same time forms a fastening element for the bearing element (4).

F

A

1

6

6

A

2   5   7

B

9

4

Z

9

FIG.1

1.Grades

3.Grades

2.Grades

B

9

3

7

a

8

4

9

s

s1

18

FIG.2

EP 0 195 884 B1

2/2

FIG.3

FIG.4

FIG.5